# EUROPÄISCHE PATENTANMELDUNG

(11) **EP 3 663 797 A1**
(43) Veröffentlichungstag der Anmeldung: **10.06.2020**
(21) Anmeldenummer: 18210965.2
(22) Anmeldetag: 07.12.2018
(51) Int. Cl.: G01S 17/02, G05B 9/03

(54) **ÜBERWACHUNGSVORRICHTUNG**

(71) Anmelder: Leuze electronic GmbH + Co. KG, 73277 Owen/Teck (DE)
(72) Erfinder: Heckmayr, Alexander, 86807 Buchloe (DE); Feller, Bernhard, 86316 Friedberg (DE)
(74) Vertreter: Ruckh, Rainer Gerhard

(57) **Zusammenfassung**

Die Erfindung betrifft eine Überwachungsvorrichtung (1) mit einer Steuereinheit (3) und einem optischen Sensor (4). Die Steuereinheit (3) ist zur Steuerung des optischen Sensors (4) ausgebildet. Von der Steuereinheit (3) wird wenigstens ein periodisches Steuersignal an den optischen Sensor (4) übertragen. Durch unterschiedliche Ausbildungen einer Kenngröße des periodischen Steuersignals in Form der Frequenz, der Pulsweiten, der Pulspausen oder dem Pulsweiten-/Pulspausenverhältnis sind unterschiedliche Schutzfelder für den optischen Sensor (4) vorgegeben.

## Beschreibung

Die Erfindung betrifft eine Überwachungsvorrichtung und ein Verfahren am Betrieb einer Überwachungsvorrichtung.

Derartige Überwachungsvorrichtungen werden insbesondere im Bereich der Sicherheitstechnik eingesetzt und dienen allgemein zur Absicherung von gefahrbringenden Anlagen, die generell von stationär angeordneten Maschinen oder Arbeitsgeräten oder auch von Fahrzeugen gebildet sein können.

Generell umfasst die Überwachungsvorrichtung eine Steuereinheit und einen optischen Sensor, wobei für den Einsatz im Bereich der Sicherheitstechnik die Steuereinheit als Sicherheitssteuerung und der optische Sensor als Sicherheitssensor ausgebildet sind.

Die Steuereinheit dient zur Steuerung der Anlage, wobei hierzu auch der optische Sensor von der Steuereinheit gesteuert wird. Mit dem optischen Sensor wird ein Gefahrenbereich an der Anlage überwacht. Typischerweise ist der optische Sensor als Flächendistanzsensor ausgebildet. Ein Flächendistanzsensor weist typischerweise einen Distanzsensor mit einem Lichtstrahlen emittierenden Sender und einen Lichtstrahlen empfangenden Empfänger auf. Die Lichtstrahlen des Senders werden periodisch in einem Winkelbereich abgelenkt und tasten so in einzelnen Scans periodisch einen Überwachungsbereich ab.

Mit einem derartigen Flächendistanzsensor erfolgt eine Schutzfeld-Überwachung derart, dass im optischen Sensor ein Schutzfeld vorgegeben ist, dessen Dimensionen an den zu überwachenden Gefahrenbereich angepasst ist. Mit dem optischen Sensor wird dann eine Überwachungsfunktion derart realisiert, dass in Abhängigkeit der Sensorsignale des Distanzsensors ein binäres Objektfeststellungssignal generiert wird, dessen Schaltzustände angeben, ob im Schutzfeld ein Objekt vorhanden ist oder nicht. Wird ein Objekt im Schutzfeld detektiert, wird das entsprechende Objektfeststellungssignal an die Steuerung übertragen, welche eine Sicherheitsfunktion auslöst, die Gefahrenzstände für Personen vermeidet. Im Fall einer stationären Anlage kann zum Beispiel diese Anlage durch das generierte Objektfeststellungssignal stillgesetzt werden. Für den Fall, dass die Anlage ein Fahrzeug ist, kann durch das Objektfeststellungssignal das Fahrzeug angehalten werden.

Je nach Ausbildung und Betriebszustand der Anlage kann sich der zu schützende Gefahrenbereich im Laufe der Zeit ändern. In derartigen Fällen ist es nicht ausreichend nur ein einziges Schutzfeld im optischen Sensor zu hinterlegen.

Aus der DE 199 17 509 C1 ist ein optischer Sensor beschrieben, in dessen Auswerteinheit mehrere Schutzfelder abgespeichert sind. Jedem Schutzfeld kann ein spezifischer Eingang zugeordnet sein. Über diese Eingänge kann ein geeignetes Schutzfeld ausgewählt werden.

Nachteilig hierbei ist, dass nur eine begrenzte Anzahl von Schutzfeldern im optischen Sensor vorgegeben werden kann. Weiterhin ist nachteilig, dass für die Auswahl der Schutzfelder eine komplexe Eingangsstruktur erforderlich ist, was einen hohen Konstruktions- und Kostenaufwand mit sich bringt. Schließlich ist die Auswahl von Schutzfeldern und deren Überprüfung relativ zeitaufwändig. Damit lassen sich Applikationen, bei denen eine hochdynamische Schutzfeld-Anpassung gefordert wird, nur unzureichend realisieren.

Der Erfindung liegt die Aufgabe zugrunde eine Überwachungsvorrichtung mit einer hohen Funktionalität bereitzustellen.

Zur Lösung dieser Aufgabe sind die Merkmale der unabhängigen Ansprüche vorgesehen. Vorteilhafte Ausführungsformen und zweckmäßige Weiterbildungen der Erfindungen sind in den abhängigen Ansprüchen beschrieben.

Die Erfindung betrifft eine Überwachungsvorrichtung mit einer Steuereinheit und einem optischen Sensor. Die Steuereinheit ist zur Steuerung des optischen Sensors ausgebildet. Von der Steuereinheit wird wenigstens ein periodisches Steuersignal an den optischen Sensor übertragen. Durch unterschiedliche Ausbildungen einer Kenngröße des periodischen Steuersignals sind in Form der Frequenz, der Pulsweiten, der Pulspausen oder dem Pulsweiten-/Pulspausenverhältnis unterschiedliche Schutzfelder für den optischen Sensor vorgegeben.

Die Erfindung betrifft weiterhin ein entsprechendes Verfahren.

Der Grundgedanke der Erfindung besteht somit darin, dass durch das periodische Steuersignal die Steuereinheit für den optischen Sensor stetig, das heißt kontinuierlich das Schutzfeld vorgibt, innerhalb dessen der optische Sensor eine Objektüberwachung durchführt. Die Steuereinheit kann durch Änderung von einer Kenngröße des periodischen Steuersignals das Schutzfeld des optischen Sensors vorgeben. Damit kann im optischen Sensor schnell das Schutzfeld geändert werden, wodurch eine flexible und schnelle Anpassung an unterschiedliche Applikationsbedingungen, insbesondere Gefahrensituationen möglich ist.

Die Vorgabe eines Schutzfeldes umfasst generell auch den Fall, dass mehre Teil-Schutzfelder gleichzeitig vorgegeben sein können.

Ein wesentlicher Vorteil der Erfindung besteht darin, dass durch die unterschiedlichen Ausbildungen von Kenngrößen in der Steuereinheit direkt die Dimensionen von Schutzfeldern für den optischen Sensor vorgegeben werden können. Vorzugweise ist im optischen Sensor ein Kennlinienfeld hinterlegt, anhand dessen jeder Kenngröße ein spezifisches Schutzfeld zugeordnet ist. Ein weiterer Vorteil der Erfindung besteht darin, dass anhand der Kenngröße in Form der Frequenz, der Pulsweiten, der Pulspausen oder der Pulsweiten-/Pulspausenverhältnisse eine sehr große Anzahl von unterschiedlichen Schutzfeldern vorgegeben werden, da diese Größen quasikontinuierlich verändert werden können um so unterschiedliche Schutzfelder vorzugeben.

Weiterhin können die Kenngrößen des periodischen Steuersignals in der Steuereinheit sehr schnell variiert werden, so dass dementsprechend schnell das aktuelle Schutzfeld des optischen Senders geändert werden kann.

Mit dem optischen Sensor wird generell eine Überwachungsfunktion derart realisiert, dass mit diesem in das jeweils aktivierte Schutzfeld eindringende Objekte erfasst werden. Abhängig davon, ob ein Objekt im Schutzfeld detektiert wird oder nicht, wird im optischen Sensor ein binäres Objektfeststellungssignal generiert, dessen Schaltzustände ergeben, ob sich ein Objekt im Schutzfeld befindet oder nicht. Dieses Objektfeststellungssignal wird an die Steuereinheit ausgegeben, wo das Objektfeststellungssignal für Steuerungsfunktionen genutzt werden kann.

Gemäß einer vorteilhaften Ausführungsform ist die Steuereinheit eine Sicherheitssteuerung. Der optische Sensor ist ein Sicherheitssensor.

Damit kann die Überwachungsvorrichtung im Bereich der Sicherheitstechnik, insbesondere im Bereich des Personenschutzes eingesetzt werden. Insbesondere wird mit der Überwachungsvorrichtung ein Gefahrenbereich einer Anlage überwacht. Je nach situationsbedingter Änderung des Gefahrenbereichs kann das Schutzfeld daran angepasst werden. Wird mit dem optischen Sensor ein Objekt im Schutzfeld erfasst, wird das dadurch generierte Objektfeststellungssignal zur Auslösung einer Sicherheitsfunktion in der Steuereinheit verwendet, die allgemein die überwachte Anlage in einen sicheren Zustand überführt.

Die überwachte Anlage kann stationär ausgebildet sein, beispielsweise in Form einer Maschine oder eines Arbeitsgeräts. In diesem Fall kann die Sicherheitsfunktion darin bestehen, die gesamte Anlage oder dessen gefahrbringenden Teil stillzusetzen.

Besonders vorteilhaft wird die Überwachungsvorrichtung in einem Fahrzeug wie zum Beispiel einem fahrerlosen Transportahrzeug, eingesetzt. Die Steuereinheit wird dann zur Fahrzeugsteuerung verwendet, der optische Sensor wird vorzugsweise zur Überwachung des Vorfelds des Fahrzeugs verwendet.

Die erfindungsgemäße Variation der Schutzfelder kann dann vorteilhaft zu einer geschwindigkeitsabhängigen Schutzfeld-Anpassung genutzt werden. Da die Schutzfeld-Variation in Abhängigkeit der Kenngröße des periodischen Steuersignals quasikontinuierlich, das heißt in sehr kleinen Schritten und zudem sehr schnell erfolgen kann, ist eine genaue Anpassung der Schutzfelder an die Fahrzeuggeschwindigkeit möglich und zwar auch dann, wenn sich diese schnell ändert.

Gemäß einer zweckmäßigen Ausführungsform variiert die Kenngröße zwischen einem oberen und unteren Sockelwert. Durch die Sockelwerte ist eine minimale und maximale Dimension eines Schutzfeldes vorgegeben.

Dabei kann die minimale Schutzfeld-Größe der Größe Null entsprechen, so dass in diesem Fall keine Schutzfeld-Überwachung mehr durchgeführt wird. Durch die Vorgabe des durch den oberen und unteren Sockelwert begrenzten Wertebereich der jeweiligen Kenngrößen und durch die eindeutige Zuordnung von Werten der Kenngrößen zu jeweils einem Schutzfeld werden undefinierte Zustände und dadurch bedingte Fehlerquellen vermieden.

Gemäß einer besonders vorteilhaften Variante der Erfindung erfolgt die Vorgabe von Schutzfeldern mittels zweier unabhängiger periodischer Steuersignale. Dadurch wird die Fehlersicherheit der Schutzfeld-Vorgabe erheblich erhöht, da mit den beiden periodischen Steuersignalen ein redundantes Signal für die Schutzfeld-Vorgabe bereitgestellt wird.

In dem optischen Sensor können durch einen Vergleich der periodischen Steuersignale Fehlerquellen aufgedeckt werden, wobei bei fehlerhafter Vorgabe ein entsprechendes Fehlersignal generiert werden kann, mit der der optische Sensor und die Überwachungsvorrichtung in einen sicheren Zustand überführt wird. Generell erfolgt durch den Vergleich der periodischen Steuersignale im optischen Sensor eine Gültigkeitsprüfung der Schutzfeld-Vorgabe, wobei eine Aktivierung eines Schutzfeldes nur bei als gültig erkannten periodischen Steuersignalen erfolgt.

Besonders vorteilhaft sind dabei die Kenngrößen der beiden periodischen Steuersignale zur Vorgabe eines Schutzfeldes unterschiedlich.

Damit ist eine verbesserte Fehleraufdeckung des redundanten Signals möglich.

Gemäß einer ersten Variante werden die periodischen Steuersignale über separate Leitungen an den optischen Sender übertragen.

In diesem Fall werden vorteilhaft die zur Vorgabe eines Schutzfeldes dienenden Kenngrößen gleichzeitig an den optischen Sensor übertragen.

Da die beiden periodischen Steuersignale zur Vorgabe eines Schutzfeldes gleichzeitig vorliegen, kann deren Vergleich sofort erfolgen, so dass die Gültigkeitsprüfung und die folgende Schutzfeld-Aktivierung sehr schnell durchgeführt werden kann.

Alternativ werden die periodischen Steuersignale über eine gemeinsame Leitung an den optischen Sensor übertragen.

In diesem Fall ist nur eine Leitung zur Übertragung der periodischen Steuersignale erforderlich, was den konstruktiven Aufwand der Überwachungsvorrichtung verringert.

Prinzipiell können die periodischen Steuersignale überlagert sein.

Die periodischen Steuersignale können dann wieder zeitlich parallel zur Vorgabe eines Schutzfeldes übertragen werden. Die Gültigkeitsprüfung der periodischen Steuersignale kann dementsprechend ohne zeitliche Verzögerung erfolgen, wobei die Gültigkeitsprüfung insbesondere durch einen Vergleich der Steuersignale erfolgt.

Alternativ können die periodischen Steuersignale zeitlich versetzt übertragen werden.

Um einen Vergleich der periodischen Steuersignale für eine Gültigkeitsüberprüfung durchführen zu können muss der zeitliche Versatz der periodischen Steuersignale im optischen Sensor bekannt sein.

Gemäß einer vorteilhaften Ausführungsform ist der optische Sensor ein Flächendistanzsensor, welcher einen Distanzsensor mit einem Sender und Empfänger aufweist. Die Lichtstrahlen des Senders sind dabei periodisch im Schutzfeld geführt.

Je nach Ausführungsart werden die Lichtstrahlen des Senders mit einer Ablenkeinheit abgelenkt oder der Distanzsensor ist in einem rotierenden Messkopf integriert.

Gemäß einer alternativen Ausgestaltung kann der optische Sensor auch als eine distanzmessende Kamera ausgebildet sein.

Die Erfindung wird im Folgenden anhand der Zeichnungen erläutert. Es zeigen:
- Figur 1:: Ausführungsbeispiel der erfindungsgemäßen Überwachungsvorrichtung.
- Figur 2:: Erstes Ausführungsbeispiel eines optischen Sensors der Überwachungsvorrichtung gemäß Figur 1 in Form eines Flächendistanzsensors.
- Figur 3:: Zweites Ausführungsbeispiel eines optischen Sensors der Überwachungsvorrichtung gemäß Figur 1 in Form eines Flächendistanzsensors.
- Figur 4:: Erstes Beispiel einer Vorgabe von Schutzfeldern für den optischen Sensor der Überwachungsvorrichtung gemäß Figur 1.
- Figur 5:: Zweites Beispiel einer Vorgabe von Schutzfeldern für den optischen Sensor der Überwachungsvorrichtung gemäß Figur 1.
- Figur 6:: Drittes Beispiel einer Vorgabe von Schutzfeldern für den optischen Sensor der Überwachungsvorrichtung gemäß Figur 1.

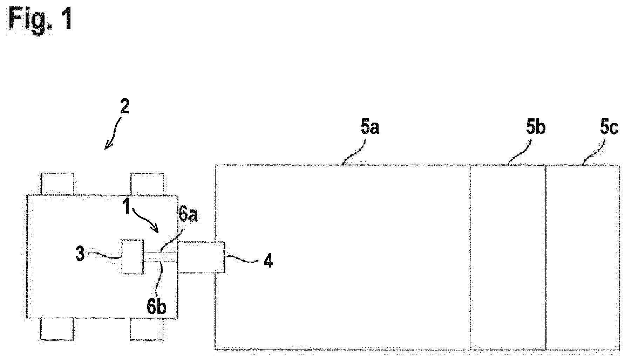

Figur 1 weist ein Beispiel der erfindungsgemäßen Überwachungsvorrichtung 1 auf. Die Überwachungsvorrichtung 1 dient im vorliegenden Fall zur Überwachung des Vorfelds eines Fahrzeugs 2. Die Überwachungsvorrichtung 1 weist eine Steuereinheit 3 und einen optischen Sensor 4 auf. Für den Einsatz im Bereich der Sicherheitstechnik ist die Steuereinheit 3 als Sicherheitssteuerung ausgebildet. Entsprechend ist der optische Sensor 4 als Sicherheitssensor ausgebildet. Dies wird durch einen fehlersicheren Aufbau der Steuereinheit 3 und des optischen Sensors 4 realisiert. Die Steuereinheit 3 dient zur Steuerung des Fahrzeugs 2. Mit dem optischen Sensor 4 wird das Vorfeld des Fahrzeugs 2 überwacht. Hierzu erfolgt mit dem optischen Sensor 4 eine Erfassung von Objekten in einem Schutzfeld 5a, 5b, 5c. Über die Steuereinheiten 3 können für den optischen Sensor 4 unterschiedliche Schutzfelder 5a, 5b, 5c vorgegeben werden, wobei die Vorgabe der Schutzfelder 5a, 5b, 5c abhängig von der Geschwindigkeit des Fahrzeugs 2 erfolgt.

In Figur 1 sind drei verschiedene Schutzfelder 5a, 5b, 5c dargestellt. Entsprechend der kontinuierlichen Geschwindigkeitsvariation wird über die Steuereinheit 3 eine erheblich größere Anzahl von Schutzfeldern 5a, 5b, 5c vorgegeben. Im vorliegenden Fall weisen alle Schutzfelder 5a, 5b, 5c dieselbe Breite auf, da das Fahrzeug 2 entlang einer zeitlich begrenzten Fahrbahn bewegt wird. Die Schutzfelder 5a, 5b, 5c unterscheiden sich somit nun auch in ihrer Länge, das heißt durch ihre dem Fahrzeug 2 abgewandte Schutzfeldgrenze.

Zur Vorgabe der Schutzfelder 5a, 5b, 5c ist die Steuereinheit 3 über zwei Leitungen 6a, 6b mit dem optischen Sensor 4 verbunden. Weiterhin weist der optische Sensor 4 einen fehlersicheren Ausgang auf (in den Figuren nicht dargestellt), über welchen ein im optischen Sensor 4 generiertes binäres Objektfeststellungssignal in die Steuereinheit 3 eingelesen wird. Die Schaltzustände des Objektfeststellungssignals geben an, ob sich ein Objekt im aktuellen Schutzfeld 5a, 5b, 5c befindet oder nicht. Wird mit dem optischen Sensor 4 ein Objekt im Schutzfeld 5a, 5b, 5c erfasst und ein entsprechendes Objektfeststellungssignal generiert, wird mit der Steuereinheit 3 abhängig vom Objektfeststellungssignal eine Sicherheitsfunktion ausgelöst. Die Sicherheitsfunktion besteht vorteilhaft in einem Stopp- oder Abbremsbefehl für das Fahrzeug 2.

Der optische Sensor 4 ist im vorliegenden Fall als Flächendistanzsensor ausgebildet.

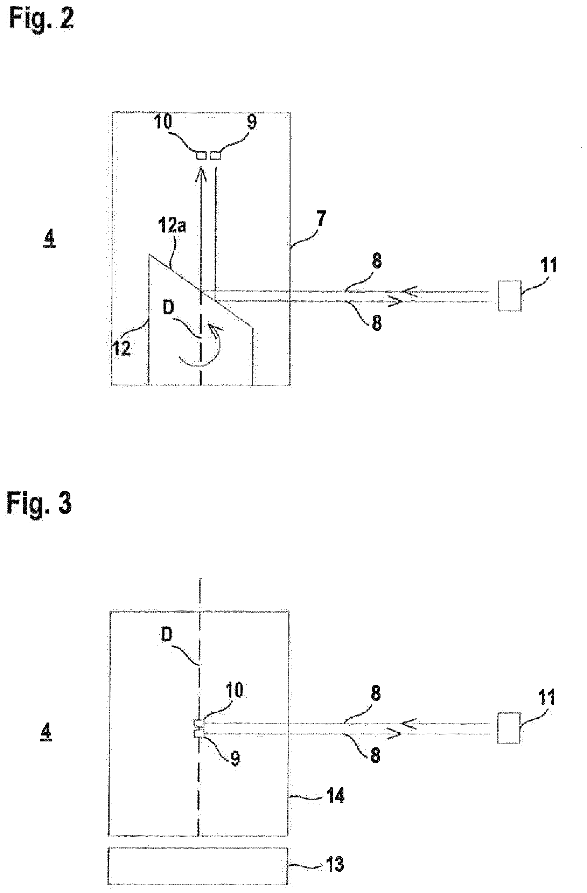

Figur 2 zeigt eine erste Ausführungsform eines Flächendistanzsensors. Der Flächendistanzsensor weist einen in einem Gehäuse 7 stationär angeordneten Distanzsensor mit einem Lichtstrahlen 8 emittierenden Sender 9 und einem Lichtstrahlen 8 empfangenen Empfänger 10 auf. Der Sender 9 ist beispielsweise von einer Laserdiode gebildet, der Empfänger 10 von einer Photodiode. Die Bestimmunen der Distanzen von Objekten erfolgt beispielsweise nach einem Puls-Laufzeit-Verfahren, wobei hierzu der Sender 9 Lichtstrahlen 8 in Form von Lichtpulsen emittiert. Die vom Sender 9 emittierten Lichtstrahlen 8 wie auch die von einem zu detektierenden Objekt, das heißt einem Gegenstand 11 mit einer remittierenden Oberfläche zurückreflektierten Lichtstrahlen 8 werden über eine Spiegelfläche 12a einer Ablenkeinheit 12 geführt. Durch die Drehbewegung der motorisch getriebenen Ablenkeinheit 12 um eine Drehachse D werden die Lichtstrahlen 8 in einem Winkelbereich abgelenkt. Durch Ermittlung der Distanzen mit dem Distanzsensor und durch die Ermittlung der aktuellen Ablenkpositionen können Positionen von Objekten insbesondere innerhalb eines Schutzfelds 5a, 5b, 5c erfasst werden.

Figur 3 zeigt eine Variante des Flächendistanzsensors gemäß Figur 2. Der Flächendistanzsensor gemäß Figur 3 unterscheidet sich vom Flächendistanzsensor gemäß Figur 2 dadurch, dass der Sender 9 und Empfänger 10 des Distanzsensors in einem auf einen Sockel 13 gelagerten, eine Drehachse D drehbaren Messkopf 14 gelagert sind.

Bei den Flächendistanzsensoren der Figuren 2 und 3 wird mit den Lichtstrahlen 8 durch deren Ablenkbewegung ein Schutzfeld 5a, 5b, 5c mit einer Folge von Scans periodisch abgetastet.

Die aktuellen Distanzwerte und Ablenkpositionen der Lichtstrahlen 8 werden in einer Auswerteeinheit ausgewertet um das Objektfeststellungssignal zu generieren. Zur Erfüllung der Anforderungen im Bereich der Sicherheitstechnik weist die Auswerteeinheit einen redundanten Aufbau auf, vorzugsweise in Form zweier sich gegenseitig zyklisch überwachender Rechnereinheiten.

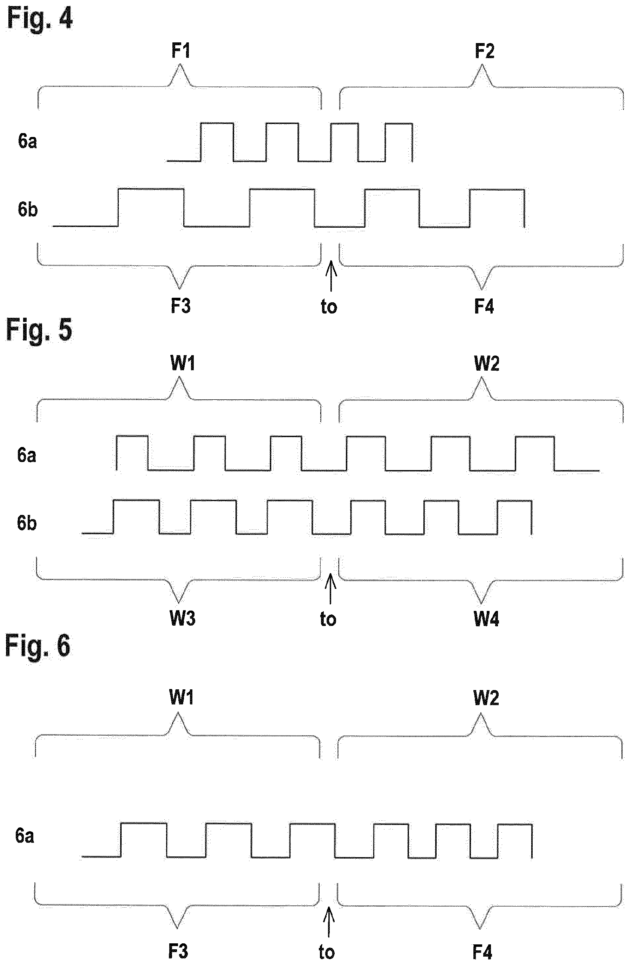

Die Figuren 4 - 6 zeigen unterschiedliche Varianten der erfindungsgemäßen Vorgabe von Schutzfeldern 5a, 5b, 5c des optischen Sensors 4 durch die Steuereinheit 3.

Generell wird über die Leitungen 6a, 6b jeweils ein periodisches Steuersignal in den optischen Sensor 4 eingegeben, durch welches eine stetige, das heißt dauerhafte Vorgabe eines Schutzfeldes 5a, 5b, 5c für den optischen Sensor 4 erfolgt. Die Vorgabe eines Schutzfeldes 5a, 5b, 5c kann generell auch derart ausgestaltet sein, dass ein Schutzfeld 5a, 5b, 5c mehrere Teil-Schutzfelder umfasst, die zumindest teilweise unterschiedliche Raumbereiche abdecken. Prinzipiell kann die Vorgabe eines Schutzfeldes 5a, 5b, 5c auch nur über eine Leitung erfolgen. In diesem Fall kann entweder nur ein periodisches Steuersignal zur Vorgabe des Schutzfeldes 5a, 5b, 5c an den optischen Sensor 4 übertragen werden. Weiterhin können über eine Leitung zwei periodische Steuersignale übertragen werden, und zwar entweder derart, dass diese überlagert sind, wobei dann in der Auswerteeinheit des optischen Sensors 4 eine Separation der periodischen Steuersignale erfolgt. Weiterhin können die periodischen Steuersignale über die Leitung zeitlich versetzt übertragen werden.

Generell variieren die als diskrete Pulsfolgen ausgebildeten periodischen Steuersignale hinsichtlich einer Kenngröße, die entweder von der Frequenz der Pulsweiten, den Pulspausen oder dem Pulsweiten-/Pulspausenverhältnis gebildet sind. Durch Vorgabe unterschiedlicher Kenngrößen werden unterschiedliche Schutzfelder 5a, 5b, 5c im optischen Sensor 4 ausgewertet. Die unterschiedlichen Kenngrößen kodieren somit unterschiedliche Schutzfelder 5a, 5b, 5c, wobei diese Kodierungen in der Auswerteeinheit eindeutig erfasst und erkannt werden können. Beispielsweise können hierzu in der Auswerteeinheit des optischen Sensors 4 entsprechende Kennlinienfelder mit einer eindeutigen Zuordnung von Werten der Kenngrößen zu den Schutzfeldern 5a, 5b, 5c hinterlegt sein.

Figur 4 zeigt ein erstes Ausführungsbeispiel einer Vorgabe von Schutzfeldern 5a, 5b, 5c durch Einlesen zweier periodischer Steuersignale über die Leitungen 6a, 6b in den optischen Sensor 4. Die über die Leitungen 6a, 6b eingelesenen periodischen Steuersignale unterscheiden sich hinsichtlich ihrer Frequenzen, wie die dargestellten Zeitdiagramme zeigen.

Wie aus Figur 4 ersichtlich, wird zunächst über die Leitung 6a ein periodisches Steuersignal mit der Frequenz F1 eingelesen und über die Leitung 6b ein periodisches Steuersignal mit der Frequenz F3 eingelesen.

Die über die Leitungen 6a, 6b eingelesenen redundanten generell unterschiedlichen periodischen Steuersignale werden in der Auswerteeinheit des optischen Sensors 4 auf ihre Gültigkeit überprüft, das heißt in der Auswerteeinheit erfolgt eine Fehlerüberwachung der periodischen Steuersignale.

In dem optischen Sensor 4 wird ein erstes Schutzfeld 5a nur dann aktiviert, wenn in der Auswerteeinheit gleichzeitig an der Leitung 6a das periodische Steuersignal mit der Frequenz F1 und an der Leitung 6b das periodische Steuersignal mit der Frequenz F3 erkannt. Die Vorgabe des Schutzfeldes 5a erfolgt stetig, das heißt das Schutzfeld 5a bleibt so lange aktiviert, solange diese periodischen Steuersignale erkannt werden.

Zum Zeitpunkt to schaltet die Steuereinheit 3 das periodische Steuersignal auf der Leitung 6a von den Frequenzen F1 auf die Frequenz F2 um. Weiterhin schaltet die Steuereinheit 3 das periodische Steuersignal auf der Leitung 6b zum gleichen Zeitpunkt to von der Frequenz F3 auf die Frequenz F4 um. Nur wenn in der Auswerteeinheit des optischen Sensors 4 gleichzeitig auf der Leitung 6a das periodische Steuersignal mit der Frequenz F2 und auf der Leitung 6b das periodische Steuersignal mit der Frequenz F4 registriert wird, wird in der Auswerteeinheit ein Schutzfeld 5b aktiviert.

Da die Frequenzen der periodischen Steuersignale nahezu kontinuierlich variiert werden können, kann abhängig von der Geschwindigkeit des Fahrzeugs 2 eine entsprechend hohe Anzahl an verschiedenen Schutzfeldern 5a, 5b, 5c für den optischen Sensor 4 vorgegeben werden, so dass die Schutzfeld-Größe quasikontinuierlich an die Geschwindigkeit des Fahrzeugs 2 angepasst werden kann. Vorteilhaft erfolgt die Frequenzvariation der periodischen Steuersignale zwischen einem unteren und oberen Sockelwert, wobei der untere Sockelwert eine minimale Schutzfeld-Größe definiert, die insbesondere Null sein kann und der obere Sockelwert eine maximale Schutzfeld-Größe definiert. Vorteilhaft sind der untere und obere Sockelwert für die beiden periodischen Steuersignale jeweils unterschiedlich.

Figur 5 zeigt ein weiteres Ausführungsbeispiel der Vorgabe von Schutzfeldern 5a, 5b, 5c für den optischen Sensor 4 durch periodische Steuersignale auf den Leitungen 6a, 6b. Die Ausführungsform der Figur 5 unterscheidet sich von der Ausführungsform der Figur 4 nur dadurch, dass sich die periodischen Steuersignale nicht hinsichtlich ihrer Frequenzen F1 - F4 sondern hinsichtlich ihrer Pulsweiten W1 - W4 unterscheiden. Demzufolge wird zu Zeiten t<to ein Schutzfeld 5a dadurch aktiviert, dass auf der Leitung 6a ein periodisches Steuersignal mit der Pulsweite W1 und auf der Leitung 6b ein periodisches Steuersignal mit der Pulsweite W3 im optischen Sensor 4 registriert wird. Zu Zeiten t>to wird ein Schutzfeld 5b dadurch aktiviert, dass auf der Leitung 6a ein periodisches Steuersignal mit der Pulsweite W2 und auf der Leitung 6b ein periodisches Steuersignal mit der Pulsweite W4 registriert wird. Auch in diesem Fall wurden für die Pulsweiten der periodischen Steuersignale untere und obere Sockelwerte definiert.

Das Ausführungsbeispiel gemäß Figur 5 kann dahingehend variiert werden, dass sich die periodischen Steuersignale nicht hinsichtlich der Pulsweite, sondern hinsichtlich der Pulspause oder des Pulsweiten-/Pulspausenverhältnisses unterscheiden.

Auch Kombinationen dieser Kenngrößen sind möglich.

Bei der Ausführungsform gemäß Figur 6 erfolgt die Vorgabe von Schutzfeldern 5a, 5b, 5c für den optischen Sensor 4 nur über ein periodisches Steuersignal, das sich hinsichtlich seiner Frequenz F3, F4 und hinsichtlich seiner Pulsweite W1, W2 ändert.

Zu Zeiten t<to wird ein Schutzfeld 5a dadurch aktiviert, dass auf der Leitung 6a ein periodisches Steuersignal mit der Frequenz F2 und der Pulsweite W1 registriert wird. In Zeiten t>to wird ein weiteres Schutzfeld 5b dadurch aktiviert, dass auf der Leitung 6b ein periodisches Steuersignal mit der Frequenz F4 und der Pulsweite W2 registriert wird.

Im optischen Sensor 4 erfolgt eine Fehlerkontrolle anhand der Überprüfung der Frequenz und der Pulsweite des periodischen Steuersignals. Diese Größen müssen in einem bestimmten Verhältnis zueinander stehen, ansonsten liegt ein Fehlerzustand vor.

### Bezugszeichenliste

- (1): Überwachungsvorrichtung
- (2): Fahrzeug
- (3): Steuereinheit
- (4): optischer Sensor
- (5a): Schutzfeld
- (5b): Schutzfeld
- (5c): Schutzfeld
- (6a): Leitung
- (6b): Leitung
- (7): Gehäuse
- (8): Lichtstrahl
- (9): Sender
- (10): Empfänger
- (11): Gegenstand
- (12): Ablenkeinheit
- (12a): Spiegelfläche
- (13): Sockel
- (14): Messkopf

## Patentansprüche

1. Überwachungsvorrichtung (1) mit einer Steuereinheit (3) und einem optischen Sensor (4), wobei die Steuereinheit (3) zur Steuerung des optischen Sensors (4) ausgebildet ist, und wobei der optische Sensor (4) zur Erfassung von Objekten innerhalb wenigstens eines Schutzfeldes (5a, 5b, 5c) ausgebildet ist, **dadurch gekennzeichnet, dass** von der Steuereinheit (3) wenigstens ein periodisches Steuersignal an den optischen Sensor (4) übertragen wird, wobei durch unterschiedliche Ausbildungen einer Kenngröße des periodischen Steuersignals in Form der Frequenz, der Pulsweiten, der Pulspausen oder dem Pulsweiten-/Pulspausenverhältnis unterschiedliche Schutzfelder (5a, 5b, 5c) für den optischen Sensor (4) vorgegeben sind.

2. Überwachungsvorrichtung (1) nach Anspruch 1, **dadurch gekennzeichnet, dass** in der Kenngröße die Dimension des jeweiligen Schutzfeldes (5a, 5b, 5c) kodiert ist.

3. Überwachungsvorrichtung (1) nach einem der Ansprüche 1 oder 2, **dadurch gekennzeichnet, dass** die Kenngröße zwischen einem oberen und unteren Schwellwert variiert, wobei durch die Sockelwerte eine minimale und maximale Dimension eines Schutzfeldes (5a, 5b, 5c) vorgegeben ist.

4. Überwachungsvorrichtung (1) nach einem der Ansprüche 1 - 3, **dadurch gekennzeichnet, dass** die Vorgabe von Schutzfeldern (5a, 5b, 5c) mittels zweier unabhängiger periodischer Steuersignale erfolgt.

5. Überwachungsvorrichtung (1) nach Anspruch 4, **dadurch gekennzeichnet, dass** die Ausbildungen der Kenngrößen der beiden periodischen Steuersignale zur Vorgabe eines Schutzfeldes (5a, 5b, 5c) unterschiedlich sind.

6. Überwachungsvorrichtung (1) nach einem der Ansprüche 4 oder 5, **dadurch gekennzeichnet, dass** die periodischen Steuersignale über separate Leitungen (6a, 6b) an den optischen Sensor (4) übertragen werden.

7. Überwachungsvorrichtung (1) nach Anspruch 6, **dadurch gekennzeichnet, dass** die zur Vorgabe eines Schutzfeldes (5a, 5b, 5c) dienenden Kenngrößen gleichzeitig an den optischen Sensor (4) übertragen werden.

8. Überwachungsvorrichtung (1) nach einem der Ansprüche 4 oder 5, **dadurch gekennzeichnet, dass** die periodischen Steuersignale über eine gemeinsame Leitung (6a) an den optischen Sensor (4) übertragen werden.

9. Überwachungsvorrichtung (1) nach Anspruch 8, **dadurch gekennzeichnet, dass** die periodischen Steuersignale überlagert sind.

10. Überwachungsvorrichtung (1) nach Anspruch 8, **dadurch gekennzeichnet, dass** die periodischen Steuersignale zeitlich versetzt sind.

11. Überwachungsvorrichtung (1) nach einem der Ansprüche 4 - 10, **dadurch gekennzeichnet, dass** im optischen Sensor (4) ein Vergleich der beiden periodischen Steuersignale erfolgt.

12. Überwachungsvorrichtung (1) nach einem der Ansprüche 1 - 11, **dadurch gekennzeichnet, dass** die Steuereinheit (3) eine Sicherheitssteuerung ist, und dass der optische Sensor (4) ein Sicherheitssensor ist.

13. Überwachungsvorrichtung (1) nach einem der Ansprüche 1 - 12, **dadurch gekennzeichnet, dass** der optische Sensor (4) ein Flächendistanzsensor oder eine distanzmessende Kamera ist.

14. Überwachungsvorrichtung (1) nach einem der Ansprüche 1 - 13, **dadurch gekennzeichnet, dass** mit dieser ein Fahrzeug (2) abgesichert wird, wobei die Schutzfelder (5a, 5b, 5c) abhängig von der Geschwindigkeit des Fahrzeugs (2) vorgegeben sind.

15. Verfahren zum Betrieb einer Überwachungsvorrichtung (1) mit einer Steuereinheit (3) und einem optischen Sensor (4), wobei die Steuereinheit (3) zur Steuerung des optischen Sensors (4) ausgebildet ist, und wobei der optische Sensor (4) zur Erfassung von Objekten innerhalb wenigstens eines Schutzfeldes (5a,5b,5c) ausgebildet ist, **dadurch gekennzeichnet, dass** von der Steuereinheit (3) wenigstens ein periodisches Steuersignal an den optischen Sensor (4) übertragen wird, wobei durch unterschiedliche Ausbildungen einer Kenngröße des periodischen Steuersignals in Form der Frequenz, der Pulsweiten, der Pulspausen oder dem Pulsweiten-/Pulspausenverhältnis unterschiedliche Schutzfelder (5a, 5b, 5c) für den optischen Sensor (4) vorgegeben werden.
